# EUROPÄISCHE PATENTSCHRIFT

(11) **EP 0 724 352 B1**
(45) Veröffentlichungstag und Bekanntmachung des Hinweises auf die Patenterteilung: **22.03.2006**
(21) Anmeldenummer: 96100798.6
(22) Anmeldetag: 20.01.1996
(51) Int. Cl.: H04M 3/56

(54) **Konferenzsystem**
Conferencing system
Système de conférence

(30) Priorität: 25.01.1995 AT 12995
(43) Veröffentlichungstag der Anmeldung: 31.07.1996
(73) Patentinhaber: Alcatel, 75008 Paris (FR)
(72) Erfinder: Eckhart, Wolfgang, A-1210 Wien (AT)
(74) Vertreter: Knecht, Ulrich Karl

(56) Entgegenhaltungen:
- EP-A- 0 067 006
- EP-A- 0 580 397
- US-A- 4 893 326
- PATENT ABSTRACTS OF JAPAN vol. 009, no. 169 (E-328), 13. Juli 1985 (1985-07-13) & JP 60 043954 A (NIPPON DENSHIN DENWA KOSHA), 8. März 1985 (1985-03-08)
- PATENT ABSTRACTS OF JAPAN vol. 012, no. 498 (E-698), 24. Dezember 1988 (1988-12-24) & JP 63 209261 A (NEC CORP), 30. August 1988 (1988-08-30)

## Beschreibung

Die Erfindung betrifft eine digitale Fernmeldevermittlungseinrichtung mit einer Schaltungsanordnung zum Herstellen einer Konferenzverbindung zwischen ausgewählten Teilnehmern, welche Speichereinrichtungen, in die die Sprachproben der Teilnehmer eingeschrieben werden, sowie Komparatoren enthaltende Bewertungs- und Auswahlschaltungen, durch die die Sprachproben ausgewertet und aufgrund vorgegebener Kriterien zu den einzelnen Teilnehmern über einen Multiplexer durchgeschaltet werden, umfaßt, und wobei die Sprachprobe des jeweils lautesten Teilnehmers den anderen Teilnehmern zugesandt wird.

Eine derartige Einrichtung ist beispielsweise aus der AT-PS 393 579 bekannt und gehört zum Typ der sogenannten Instant-Speaker-Konferenzschaltungen, bei denen die Sprachproben des gerade am lautesten sprechenden Teilnehmers an die anderen Teilnehmer gesandt werden, während üblicherweise der lauteste Teilnehmer selbst ein anderes Sprachsignal, z.B. ein Null-Signal, die Sprachprobe des vorherigen lautesten Teilnehmers, oder aber die jeweils zweitlauteste Sprachprobe, erhält. Im letzteren Fall liegt der Vorteil insbesonders darin, daß der jeweils das Gespräch führende lauteste Teilnehmer weder den Eindruck hat, daß die Leitung tot ist, noch ein Gemisch von nur schwer zu identifizierenden Sprachproben erhält. Er kann vielmehr auf einen zweiten Sprecher, der nur etwas leiser redet, aufmerksam werden und diesen zu Wort kommen lassen. Bei allen genannten Einrichtungen bleiben die bekannten Vorteile der Instant-Speaker-Konferenzschaltungen erhalten: Ein wesentlich geringerer Aufwand als bei Konferenzen nach dem sogenannten Additionsprinzip, bei dem die von den einzelnen Konferenzteilnehmern ankommenden Sprachproben aufsummiert und das Ergebnis wieder an die Teilnehmer gesendet wird, keine Gefahr der Pegelüberschreitung und keine Notwendigkeit, kompandierte PCM-Proben zu linearisieren und nach der Addition wieder zu komprimieren.

Da bei Nebenstellenanlagen mit einer Einrichtung der genannten Art heutzutage Konferenzschaltungen mit bis zu acht Teilnehmern und teilweise auch mehr möglich sind erfordert es hohe Konzentration um bei Konferenzen mit vielen persönlich nicht sehr gut bekannten Teilnehmern die Stimmen der jeweiligen Sprecher noch richtig zuordnen zu können.

Aufgabe der vorliegenden Erfindung ist es Fernmeldevermittlungseinrichtungen der eingangs genannten Art so zu verbessern, daß insbesonders die Zuordnungsmöglichkeit der gerade hörbaren Stimme zum jeweils sprechenden bzw. durchgeschalteten lautesten Teilnehmer vereinfacht und verbessert wird, sodaß die Konferenzteilnehmer auf möglichst einfache und sichere Weise darüber informiert sind, welcher Teilnehmer gerade spricht.

Die vorliegende Erfindung geht zur Lösung der angeführten Aufgabe davon aus, daß der gerade aktiv geschaltete Konferenzteilnehmer relativ einfach an einer an jedem Teilnehmer-Apparat vorgesehenen optischen Anzeigeeinrichtung der anderen Teilnehmer-Apparate angezeigt werden kann, da schaltungsmäßig ohnedies wie erwähnt vorgesehen ist, daß immer nur ein jeweils lautester Teilnehmer sprechen kann bzw. von der Einrichtung bestimmungsgemäß bevorzugt wird.

Von dieser Grundidee ausgehend löst die vorliegende Erfindung die genannte Aufgabe bei einer Einrichtung der eingangs genannten Art dadurch, daß in einer Tabelleneinheit Identifikationsdaten aller Teilnehmer enthalten sind und daß die Bewertungs- und Auswahlschaltungen die Identifikationsdaten des jeweils lautesten und damit zu allen anderen durchgeschalteten Teilnehmers zu einer an jedem Teilnehmer-Apparat vorgesehenen optischen Anzeigeeinrichtung der anderen Teilnehmer-Apparate senden.

Telefonkonferenzen mit digitalen Fernmeldevermittlungseinrichtungen werden üblicherweise über ein digitales Koppelfeld zusammengeschaltet, welches von einem Softwareprogramm gesteuert wird. Von diesem Koppelfeld wird an den Steuerprozessor die Information gesendet, an welchem Eingang bzw. Port zu einer bestimmten Zeit der höchste Sprachpegel anliegt. Der Steuerprozessor sendet sodann diese Information an einen übergeordneten Konferenzsteuerprozessor, welcher eine Tabelleneinheit mit den Identifikationsdaten (beispielsweise Rufnummern und zugeordnete Namen) der Konferenzteilnehmer enthält. Der Konferenzsteuerprozessor bzw. eine entsprechende Bau- oder Programmgruppe ermittelt nun den lautesten Teilnehmer, dessen Sprachproben sodann an alle anderen Teilnehmer durchgeschaltet werden. Zusätzlich wird der Name bzw. eine Kurzbezeichnung oder sonstige Identifikationsmöglichkeit des jeweils durchgeschalteten Teilnehmers an alle passiven, zuhörenden Konferenzteilnehmer gesandt, an deren Anzeigeeinrichtung diese Teilnehmeridentifikation dann entsprechend angezeigt wird. Sind alle Sprachpegel unter einem bestimmten Schwellwert, so kann beispielsweise wie bekannt ein allgemeiner Hinweis, etwa "Konferenz" oder der Name des Teilnehmers der die Konferenz einberufen hat, eingeblendet werden. Insgesamt wird das Führen von Konferenzen insbesonders mit größere Anzahl von untereinander nicht sehr gut bekannten Teilnehmern komfortabler.

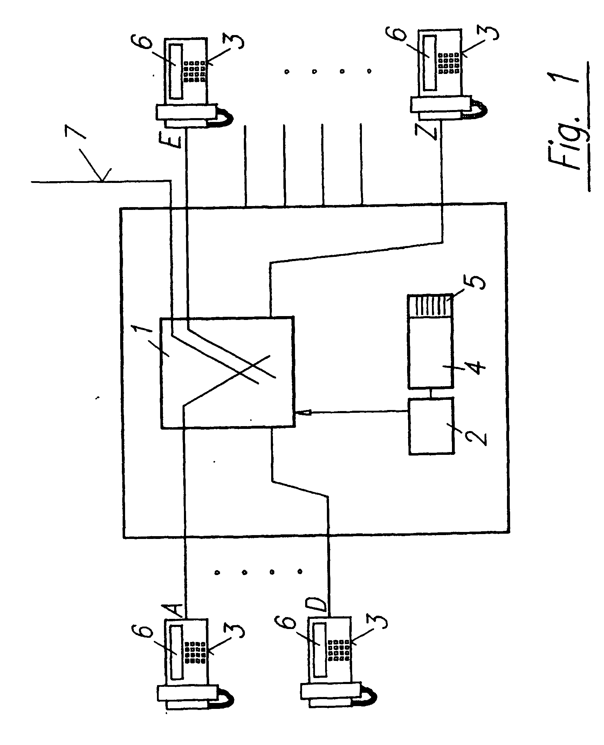

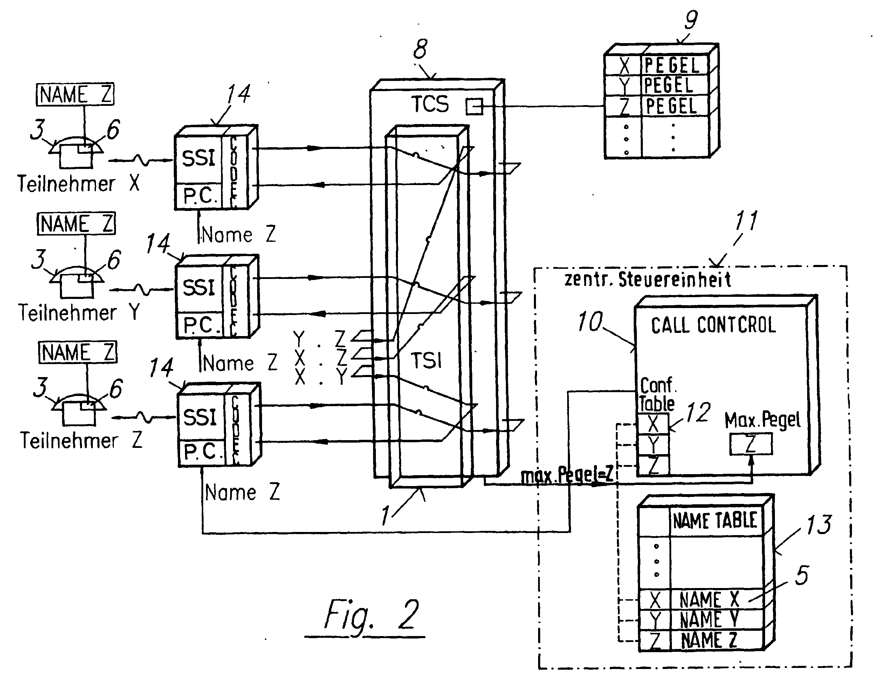

Die Erfindung wird im folgenden noch an Hand der in der Zeichnung schematisch dargestellten Ausführungsbeispiele näher erläutert. Fig. 1 zeigt dabei ein schematisches Schaltbild einer erfindungsgemäßen Einrichtung und Fig. 2 eine gegenüber Fig. 1 etwas detailliertere Darstellung eines anderen Ausführungsbeispieles der Erfindung.

Gemäß der in Fig. 1 dargestellten digitalen Fernmeldevermittlungseinrichtung wird eine Konferenz über ein digitales Koppelfeld 1 zusammengeschaltet, welches von einem hier nicht weiter interessierenden Softwareprogramm gesteuert wird. Vom Koppelfeld 1 wird an den Steuerprozessor 2 die Information gegeben, an welchem Eingang bzw. Port A bis Z mit den angeschlossenen Teilnehmer-Apparaten 3 derzeit der höchste Sprachpegel anliegt. Der Steuerprozessor 1 sendet diese Information an den Konferenzsteuerprozessor 4, welcher eine Tabelleneinheit 5 mit Identifikationsdaten (insbesonders Rufnummer/Name) der Konferenzteilnehmer enthält. Im Konferenzsteuerprozessor 4 werden die entsprechenden Identifikationsdaten des lautesten Teilnehmers ermittelt, welcher an alle anderen Teilnehmer durchgeschaltet wird.

Der Name bzw. die entsprechenden Identifikationsdaten des jeweils aktiv durchgeschalteten, lautesten Teilnehmers wird bzw. werden an die anderen passiven, zuhörenden Konferenzteilnehmern gesendet, bei denen an einer optischen Anzeigeeinrichtung 6 ihres Teilnehmer-Apparates 3 dieser Name bzw. die entsprechenden Identifikationsdaten angezeigt werden.

Abgesehen von rein hausinternen Konferenzen mit in einem Hausnetz o.dgl. verbundenen Teilnehmern sind natürlich auch über eine Amtsleitung 7 zugeschaltete externe Teilnehmer möglich, wobei es belanglos ist, ob die Identifikationsdaten derartiger externer Teilnehmer (beispielsweise Außendienstmitarbeiter oder Mitarbeiter in Zweigstellen) ebenfalls von vornherein in der Tabelleneinheit 5 gespeichert sind oder nur für die Zwecke der jeweiligen Konferenz eingegeben werden. Auch könnte beispielsweise im Falle eines über die Amtsleitung 7 zugeschalteten externen Teilnehmers nur eine allgemeine Identifikation (beispielsweise "extern") an den anderen Teilnehmer-Apparaten angezeigt werden, sobald dieser externe Teilnehmer tatsächlich als aktueller Sprecher zu den anderen durchgeschaltet wird.

Gemäß Fig. 2 sind mit X, Y und Z bezeichnete Teilnehmer in einer Konferenzschaltung und zu diesem Zweck über das digitale Koppelfeld 1 zusammengeschaltet. Für diese Konferenz steht im Koppelfeld 1 ein komplettes PCM-System mit beispielsweise 32 Kanälen zur Verfügung. Zur Steuerung der Zeitschlitze bei der Konferenz bzw. zur Berechnung der jeweiligen Pegelwerte ist eine eigene TCS-Einrichtung 8 (Telephonic Common Services) vorgesehen.

Die Teilnehmer X, Y und Z müssen bei dieser Konferenz folgende Sprachinformationen hören: Teilnehmer X - Y und Z, Teilnehmer Y - X und Z, Teilnehmer Z - X und Y, wobei in einer separaten Tabelle 9 der TCS-Einrichtung 8 die jeweiligen aktuellen Pegelwerte der Konferenzteilnehmer X, Y, Z eingetragen sind. Die Pegelwerte werden zur Unterdrückung von Störspitzen integriert und der Zeitschlitz mit dem jeweils größten Pegelwert in der Konferenzschaltung wird an eine Call Control-Einheit 10 einer zentralen Steuereinheit 11 gesendet und dort gespeichert. In dieser Call Control-Einheit 10 existiert ebenfalls eine Tabelle 12 der Konferenzteilnehmer , welche mit einer weiteren Tabelle 13 (Nametable) im System in Verbindung ist, welche eine Zuordnung von Teilnehmer und Name ermöglicht.

Von der Call Control-Einheit 10 wird während einer Konferenz an alle in der Tabelle 12 (Conferencetable) enthaltenen Teilnehmer der Name des Teilnehmers gesandt, dessen Zeitschlitz momentan den größten Pegel liefert und der damit zu den anderen durchgeschaltet ist. Im vorliegenden Beispiel liefert der Teilnehmer-Apparat 3 des Teilnehmers Z (SSI-Subscriber Interface) den größten Pegel. Diese Informationen sendet die TCS-Einrichtung 8 an die Call Control-Einheit 10 welche über die Namens-Tabelle 13 Zugriff zum Namen des Teilnehmers Z hat und diesen an alle SSI-Einheiten der Konferenz sendet. Damit kann auf jeder Anzeigeeinheit 6 der Konferenzteilnehmer der Name des Teilnehmers Z angezeigt werden.

Abgesehen davon, daß auf dem Teilnehmer-Apparat 3 des Teilnehmers Z selbst natürlich auch sein eigener Name angezeigt werden kann, ist es auch möglich, auf dem jeweils zu den anderen durchgeschalteten Teilnehmer-Apparat 3 eine andere Information (beispielsweise "aktiv" o.dgl.) anzuzeigen.

## Patentansprüche

1. Digitale Fernmeldevermittlungseinrichtung mit einer Schaltungsanordnung zum Herstellen einer Konferenzverbindung zwischen ausgewählten Teilnehmern, welche Speichereinrichtungen, in die die Sprachproben der Teilnehmer eingeschrieben werden, sowie Komparatoren enthaltende Bewertungs- und Auswahlschaltungen (2, 4, 8) durch die die Sprachproben ausgewertet und aufgrund vorgegebener Kriterien zu den einzelnen Teilnehmern über einen Multiplexer durchgeschaltet werden, umfaßt, und wobei die Sprachprobe des jeweils lautesten Teilnehmers den anderen Teilnehmern zugesandt wird, **dadurch gekennzeichnet, daß** in einer Tabelleneinheit (5, 13) einer zweiten Speichereinrichtung der Fernmeldevermittlungseinrichtung Identifikationsdaten aller Teilnehmer enthalten sind und daß die Bewertungs- und Auswahlschaltungen (2, 4, 8) die Identifikationsdaten des jeweils lautesten und damit zu allen anderen durchgeschalteten Teilnehmers zu einer an jedem Teilnehmer-Apparat (3) vorgesehenen optischen Anzeigeeinrichtung (6) der anderen Teilnehmer-Apparate (3) senden.

## Claims

1. Digital telecommunication switching system with a circuit arrangement for setting up a conference call between selected participants, this system including storage facilities into which the voice samples of the participants are written, as well as weighting and selection circuits (2, 4, 8) containing comparators, by which circuits the voice samples are evaluated and on the basis of preset criteria are connected through to the individual participants via a multiplexer, the voice sample of the loudest participant in each case being sent to the other participants,
**characterized in that**
identification data for all participants is held in a table unit (5, 13) of a second storage facility of the telecommunication switching system, and that the weighting and selection circuits (2, 4, 8) send the identification data of the currently loudest participant (who is consequently connected through to all others), to the other participants' telephones (3) to an optical display device (6) provided on each participant's telephone (3).

## Revendications

1. Autocommutateur numérique de téléphonie comprenant un arrangement de circuit pour établir un circuit de conférence entre des participants sélectionnés, lequel comprend des dispositifs de mémorisation dans lesquels sont écrits les échantillons de parole des participants ainsi que des circuits d'évaluation et de sélection (2, 4, 8), contenant des comparateurs au moyen desquels les échantillons de parole sont évalués puis transférés à chacun des participants par le biais d'un multiplexeur en fonction de critères prédéfinis, et l'échantillon de parole du participant parlant le plus fort étant à chaque fois envoyé aux autres participants, **caractérisé en ce que** les données d'identification de tous les participants sont contenues dans une unité de tableau (5, 13) d'un deuxième dispositif de mémorisation de l'autocommutateur de téléphonie et que les circuits d'évaluation et de sélection (2, 4, 8) envoient les données d'identification du participant parlant à chaque fois le plus fort et ainsi connecté à tous les autres à un dispositif d'indication visuel (6) prévu sur chaque appareil de participant (3) des autres appareils de participant (3).
